# DEMANDE DE BREVET EUROPEEN

(11) **EP 1 596 285 A2**
(43) Date de publication de la demande: **16.11.2005**
(21) Numéro de dépôt: 05290595.7
(22) Date de dépôt: 17.03.2005
(51) Int. Cl.: G06F 9/38

(54) **Dispositif et procede de gestion d'un etat d'attente d'un microprocesseur**

(30) Priorité: 18.03.2004 FR 0402816
(71) Demandeur: STMicroelectronics S.A., 92120 Montrouge (FR)
(72) Inventeur: Ferrand, Olivier, 13620 Carry le Rouet (FR); Gril-Maffre, Jean-Michel, 13090 Aix-en-Provence (FR)
(74) Mandataire: Verdure, Stéphane

(57) **Abrégé**

L'invention concerne un microprocesseur (10) comprenant une unité de calcul (12) qui comporte des unités logiques pour exécuter des opérations associées à des instructions déterminées d'un jeu d'instructions du microprocesseur et une unité de commande (14) pour interpréter les instructions et pour commander les unités logiques en conséquence. Le microprocesseur comprend en outre un temporisateur (34) interne qui est activé par l'unité de commande en réponse à l'exécution d'une instruction dédiée du jeu d'instructions du microprocesseur, dite instruction d'attente, et qui délivre un signal de temporisation (ST) délivré à l'unité de commande pour placer le microprocesseur dans un état d'attente pendant une durée de temporisation déterminée.

## Description

La présente invention concerne de manière générale la gestion d'un état d'attente d'un microprocesseur.

L'invention concerne plus particulièrement un microprocesseur ainsi qu'un procédé de commande d'un tel microprocesseur pour le placer dans un état d'attente pendant une durée déterminée.

On sait que dans les systèmes à microprocesseur la vitesse de transfert de données peut différer d'un périphérique à l'autre. De tels périphériques sont à titre d'exemple des mémoires d'architecture différente dont les taux de transfert de données sont différents.

Ainsi, lorsque le traitement d'une instruction est dépendant du résultat d'une instruction traitée précédemment, lesdites instructions faisant appel à des informations stockées dans des mémoires d'architecture différente, il peut apparaître une congestion de données au niveau du microprocesseur. Par exemple, la seconde instruction peut avoir besoin d'une adresse calculée par la première instruction.

Il est donc nécessaire de synchroniser le transfert de données, donc le traitement des instructions, au niveau du microprocesseur qui exécute des opérations associées aux instructions.

Pour éviter cette congestion de données, une solution est de ralentir volontairement le traitement d'une ou plusieurs instructions. Par exemple, la solution consiste à insérer un état d'attente d'un nombre déterminé de cycles d'horloge entre le traitement des instructions concernées. Le microprocesseur se trouve ainsi dans un état d'attente.

Dit autrement, un état d'attente est généré pour ajuster les temps de transfert lors des communications entre plusieurs périphériques gérés par le microprocesseur ou pour affiner le temps d'exécution d'un programme d'une application quelconque.

Plusieurs méthodes sont connues dans l'état de la technique pour générer un état d'attente pendant une durée déterminée correspondant à un nombre déterminé de cycles d'horloge.

Une première méthode connue dans l'état de la technique consiste à prévoir l'implémentation, dans un programme, d'une instruction NOP (mis pour « No Operation » en anglais) appartenant à un jeu d'instructions du microprocesseur. L'instruction NOP a classiquement pour fonction de générer un état d'attente pendant une durée égale à un cycle d'horloge.

Chaque instruction est traitée pendant une durée égale à un cycle, dit cycle d'instruction, qui peut se décomposer en un cycle de recherche d'une instruction, un cycle de décodage de l'instruction, un cycle d'exécution de l'instruction décodée et un cycle d'écriture du résultat de l'instruction.

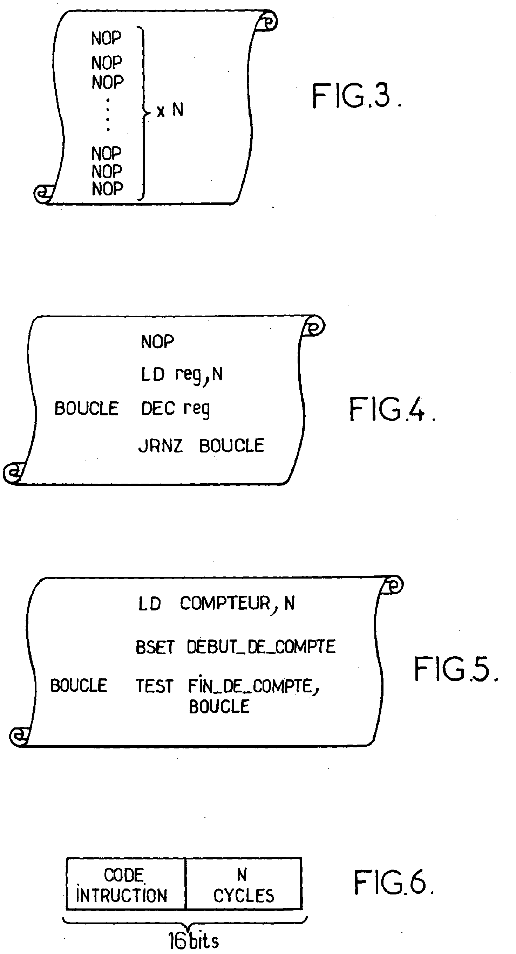

Ainsi, si l'on souhaite générer un état d'attente pendant une durée correspondant à N cycles d'horloge du microprocesseur, on commande le microprocesseur selon N instructions NOP consécutives (voir figure 3).

Or l'implémentation de ces N instructions est d'une part très coûteuse en espace mémoire (un espace mémoire stockant le programme de l'application) et monopolise N cycles d'instruction pour traiter les N instructions NOP. D'autre part, le microprocesseur travaillant pendant N cycles d'instruction, cela affecte aussi la consommation d'énergie du microprocesseur. En effet, les circuits intégrés du microprocesseur sont toujours actifs et sont sollicités pour exécuter les instructions implémentant l'état d'attente d'où une consommation d'énergie inutile. En effet, les circuits intégrés consomment autant d'énergie que lors de l'exécution d'instructions « utiles » d'un programme alors qu'ils ne réalisent aucune opération particulière exceptée la génération d'un état d'attente. De plus, on sait que la consommation d'énergie accélère la détérioration des circuits intégrés du fait de l'augmentation de la température résultante dans lesdits circuits.

Ainsi, le temps de traitement des instructions NOP est long, coûteux en tenue d'espace mémoire stockant le programme, en sorte qu'une telle implémentation est donc peu favorable pour générer un état d'attente correspondant à un nombre N de cycles d'horloge très important.

Une autre méthode connue de l'état de la technique (voir figure 4) propose d'implémenter une boucle logicielle comprenant l'instruction NOP précitée, et dont le nombre d'itérations est fonction de la durée de l'état d'attente que l'on souhaite générer. Cette méthode est avantageuse lorsque N est grand car elle est moins coûteuse en terme d'espace mémoire stockant le programme de l'application.

Un inconvénient de cette méthode réside cependant dans l'implémentation de la boucle logicielle qui nécessite quatre instructions et, par conséquent, quatre cycles d'instruction du microprocesseur pour le traitement d'une itération de la boucle (à multiplier par le nombre d'itérations de la boucle).

Un autre inconvénient de cette méthode est que l'implémentation requiert également un registre de comptage.

Dans une autre méthode connue de l'état de la technique (voir figure 5), il est également possible de programmer un compteur externe au microprocesseur. Plusieurs instructions sont néanmoins nécessaires pour programmer la durée, puis lancer le comptage et enfin surveiller la fin du comptage. De plus, une telle solution nécessite l'ajout de composants en logique câblée pour réaliser un compteur, ce qui engendre un surcoût de fabrication.

Une dernière méthode connue de l'état de la technique propose l'attente d'une interruption ou d'un événement extérieur, auquel cas, la durée de l'état d'attente n'est pas déterminée car elle dépend du moment où se produit ladite interruption ou ledit événement extérieur.

Cette méthode impose toutefois de stocker dans une mémoire externe l'adresse de reprise de l'exécution du programme de l'application. De plus, elle est peu précise en ce qui concerne le moment où doit se déclencher l'état d'attente et en ce qui concerne la durée elle-même de cet état d'attente. Cette solution convient donc pour générer des états d'attente très longs dans des systèmes ne nécessitant pas une grande précision. Cette méthode ne convient pas toutefois pour certains systèmes informatiques ou de télécommunication dont les applications sont très sensibles au temps d'exécution (applications temps réel par exemple).

Enfin, un inconvénient commun à toutes les méthodes connues de l'état de la technique est que lorsque l'on souhaite modifier la durée de l'état d'attente, la re-programmation est souvent pénible et complexe. C'est généralement vrai lors des phases de développement de systèmes télécommunication ou informatiques où les taux de transfert doivent être ajustés via un état d'attente d'un nombre déterminé de cycles d'horloge. La phase de développement ne s'en trouve que plus fastidieuse.

Afin de remédier à ces inconvénients, la présente invention propose de générer un état d'attente pendant une durée déterminée correspondant typiquement à un nombre déterminé de cycles d'horloge par l'exécution d'une unique instruction, dite instruction d'attente, tout en évitant au maximum la sollicitation des circuits intégrés qui composent le microprocesseur pendant cet état d'attente.

L'invention concerne ainsi un microprocesseur comprenant une unité de calcul qui comporte des unités logiques pour exécuter des opérations associées à des instructions déterminées d'un jeu d'instructions du microprocesseur et une unité de commande pour interpréter les instructions et pour commander les unités logiques en conséquence.

Le microprocesseur comprend en outre un temporisateur interne qui est activé par l'unité de commande en réponse à l'exécution d'une instruction dédiée du jeu d'instructions du microprocesseur, dite instruction d'attente, et qui délivre un signal de temporisation délivré à l'unité de commande pour placer le microprocesseur dans un état d'attente pendant une durée de temporisation déterminée. L'implémentation d'une telle instruction réduit considérablement la mémoire allouée pour le programme traité par le microprocesseur.

Dans un premier mode de réalisation, pour placer le microprocesseur dans l'état d'attente, l'unité de commande génère un signal de blocage pour interrompre et bloquer le traitement des instructions pendant la durée de temporisation. Ainsi, le traitement des instructions étant bloqué, les unités logiques qui exécutent en temps normal des opérations associées à des instructions respectives ne sont plus sollicitées pendant la durée de temporisation et de ce fait sont dans un état de veille à faible consommation d'énergie.

Selon une caractéristique avantageuse de l'invention, le temporisateur interne peut être programmable, la durée de temporisation étant fonction d'une valeur spécifiée en paramètre de l'instruction d'attente. La durée de temporisation peut par exemple correspondre à un nombre déterminé de cycles d'horloge du microprocesseur. Le programme pour implémenter un état d'attente de plusieurs cycles d'horloge est ainsi grandement réduit puisqu'une seule instruction dédiée du jeu d'instructions du microprocesseur est nécessaire, et gagne en souplesse d'utilisation en cas de modification de la durée de temporisation.

Dans un second mode de réalisation, l'unité de commande comporte une unité de récupération pour récupérer des instructions à exécuter qui sont stockées dans une mémoire de programme et un séquenceur qui reçoit le signal de temporisation. En réponse au signal de temporisation, le séquenceur peut délivrer le signal de blocage sur une entrée d'activation et de désactivation de ladite unité de récupération pour interrompre et bloquer la récupération des instructions.

L'unité de commande peut en outre comporter une unité de décodage pour décoder des instructions à exécuter. Ainsi, le séquenceur peut délivrer le signal de blocage sur une entrée d'activation et de désactivation de ladite unité de décodage pour interrompre et bloquer le décodage des instructions.

En général, l'unité de commande comporte aussi un registre d'instruction pour stocker une instruction à exécuter. Dans ce cas, le séquenceur peut aussi délivrer le signal de blocage sur une entrée d'activation et de désactivation dudit registre d'instruction pour interrompre et bloquer le stockage d'instructions à exécuter.

L'unité de commande peut également comprendre un compteur ordinal qui stocke l'adresse d'une future instruction à exécuter. Dans ce cas, le séquenceur peut délivrer le signal de blocage sur une entrée d'activation et de désactivation dudit compteur pour interrompre et bloquer le stockage d'adresse dans le compteur.

Avantageusement, le microprocesseur présente une architecture pipeline et/ou une architecture RISC.

L'invention propose également un procédé de gestion d'un état d'attente d'un microprocesseur comprenant une unité de calcul qui comporte des unités logiques pour exécuter des opérations associées à des instructions appartenant à un jeu d'instructions du microprocesseur et une unité de commande pour interpréter les instructions et pour commander les unités logiques en conséquence. Un tel procédé comprend les étapes suivant lesquelles :
- l'unité de commande active un temporisateur interne au microprocesseur en réponse à l'exécution d'une instruction dédiée du microprocesseur, dite instruction d'attente;
- le temporisateur délivre un signal de temporisation qui est délivré à l'unité de commande; et,
- l'unité de commande délivre un signal de blocage pour interrompre et bloquer le traitement des instructions afin de placer le microprocesseur dans l'état d'attente pendant une durée de temporisation.

Selon une caractéristique avantageuse de l'invention, un paramétrage optionnel permet de régler la durée de temporisation, ladite durée étant une valeur spécifiée en paramètre de l'instruction d'attente.

Dans un troisième mode de réalisation, l'unité de commande comprend un séquenceur qui reçoit le signal de temporisation et des unités de traitement des instructions incluant au moins une unité de récupération pour récupérer dans une mémoire programme des instructions à exécuter. En réponse au signal de temporisation, le séquenceur délivre le signal de blocage sur une entrée d'activation et de désactivation de ladite unité de récupération afin d'interrompre et bloquer la récupération des instructions pendant la durée de temporisation.

En général, l'unité de commande peut aussi comprendre au moins une unité de décodage pour décoder des instructions à exécuter. En réponse au signal de temporisation, le séquenceur peut délivrer le signal de blocage sur une entrée d'activation et de désactivation de ladite unité de récupération afin d'interrompre et bloquer la récupération des instructions pendant la durée de temporisation.

L'unité de commande peut comprendre au moins un registre d'instruction qui stocke des instructions à exécuter. En réponse au signal de temporisation, le séquenceur peut délivrer le signal de blocage sur une entrée d'activation et de désactivation dudit registre d'instruction afin d'interrompre et bloquer le stockage des instructions dans ledit registre pendant la durée de temporisation.

L'unité de commande peut comprendre au moins un compteur ordinal qui stocke l'adresse de l'instruction suivante à exécuter. En réponse au signal de temporisation, le séquenceur peut délivrer le signal de blocage sur une entrée d'activation et de désactivation dudit compteur afin d'interrompre et bloquer le stockage d'adresse pendant la durée de temporisation.

D'autres particularités et avantages de la présente invention apparaîtront dans la description ci-après d'exemples de réalisation non limitatifs, en référence aux dessins annexés, dans lesquels :
- la figure 1 est un schéma fonctionnel illustrant un mode de réalisation du microprocesseur selon l'invention ;
- la figure 2 est un organigramme illustrant un mode de mise en oeuvre du procédé selon l'invention ;
- la figure 3 illustre un exemple d'une portion de programme pour la génération d'un état d'attente de N cycles d'horloge à l'aide d'instructions NOP selon une méthode connue de l'état de la technique ;
- la figure 4 illustre un autre exemple d'une portion de programme pour la génération d'un état d'attente de N cycles d'horloge à l'aide d'une boucle logicielle comprenant l'instruction NOP selon une autre méthode connue de l'état de la technique ;
- la figure 5 illustre un autre exemple d'une portion de programme pour la génération d'un état d'attente de N cycles d'horloge à l'aide d'un compteur externe au microprocesseur selon une méthode connue de l'état de la technique ; et
- la figure 6 illustre un exemple de format de codage d'une instruction d'attente selon l'invention.

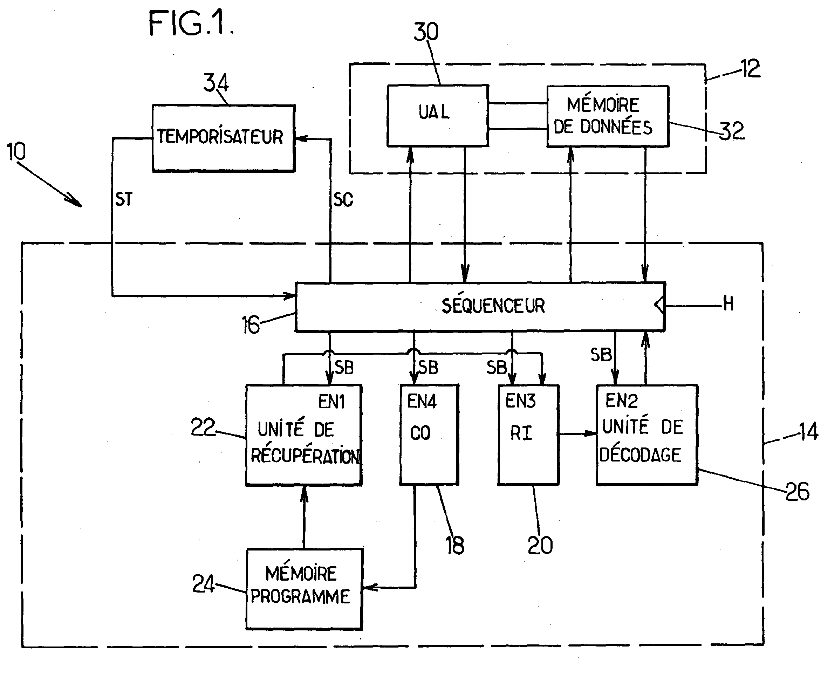

La figure 1 illustre un mode de réalisation d'un microprocesseur 10 selon l'invention.

Le microprocesseur 10 comprend une unité de calcul 12 (ou unité d'exécution) pour exécuter des opérations associées à des instructions appartenant à un jeu d'instructions une fois décodées, et une unité de commande 14 pour interpréter les instructions et commander l'unité de calcul en conséquence, au rythme de cycles d'horloge H.

L'unité de calcul 12 comprend notamment :
- une unité arithmétique et logique 30 (UAL) pour effectuer des opérations élémentaires comme des additions, des multiplications ou autres et qui comprend des unités logiques associées aux opérations élémentaires comme des additionneurs, des multiplieurs ou autres;
- une mémoire de données 32, comprenant des mémoires et/ou des registres, qui stocke des données propres aux différentes opérations.

L'unité de commande 14 comprend des unités de traitement des instructions notamment :
- un séquenceur 16 qui génère au rythme des cycles d'un signal d'horloge H des signaux de commande délivrés aux différentes unités logiques de l'unité de calcul 14 qui participent à l'exécution d'une instruction donnée;
- un compteur ordinal 18 (CO) qui est un registre stockant l'adresse de la prochaine instruction à exécuter ;
- un registre d'instruction 20 (RI) qui reçoit l'instruction à exécuter ;
- une unité de récupération 22 (« fetch unit » en anglais) qui récupère une instruction d'un code à exécuter à partir d'une mémoire de programme 24 comme par exemple une mémoire de type ROM (« Read Only Memory » en anglais), Flash EPROM (« Erasable Programmable Read/Only Memory » en anglais) ou EEPROM (« Electrical EPROM » en anglais);
- une unité de décodage 26 qui décode et interprète l'instruction à exécuter, et qui détermine les opérations élémentaires à effectuer et les opérandes ; et,
L'unité de commande 14 a pour fonction d'interpréter les instructions et de commander les différentes unités logiques de l'unité de calcul 12 en conséquence. De manière plus détaillée elle sert notamment à :
- adresser l'instruction suivante en mémoire de programme ;
- décoder l'instruction suivante une fois qu'elle est chargée dans le registre d'instructions 20 ;
- rechercher les données à traiter, dans la mémoire de programme 24 et/ou dans la mémoire de données 32 ;
- délivrer les données en entrée de l'unité de calcul 12;
- indiquer l'opération que l'unité de calcul 12 doit effectuer ;
- transférer éventuellement le(s) résultat(s) de l'opération vers la mémoire de données 32.

Le microprocesseur 10 comprend un temporisateur 34 interne et de préférence programmable. Il peut s'agir par exemple d'un compteur réalisé au moyen de bascules JK. Le temporisateur 34 est commandé par un signal de commande SC généré par le séquenceur 16 en réponse à l'exécution d'une unique instruction dédiée du jeu d'instructions du microprocesseur 10, dite instruction d'attente. La durée de temporisation est fonction d'un paramètre spécifié en paramètre de l'instruction d'attente. Tel qu'illustré à la figure 6, l'instruction d'attente comprend alors un premier champ contenant le code de l'instruction et un second champs contenant la valeur de la durée de temporisation.

En variante, la durée de temporisation peut être fixée, égale à un nombre déterminé N de cycles d'horloge, avec N strictement supérieur à l'unité.

Une fois le temporisateur commandé, il émet un signal de temporisation ST vers le séquenceur 16 lequel émet un signal de blocage SB vers l'unité de récupération 22. Par exemple, le signal de blocage SB est délivré sur une entrée EN1 d'activation et de désactivation, dite « entrée ENABLE », de l'unité de récupération 22 afin que ladite unité soit désactivée pour interrompre la récupération des instructions à partir de la mémoire de programme 24.

Ainsi, aucune instruction n'est récupérée et n'est donc décodée pendant la durée de temporisation. Le séquenceur 16 ne délivre plus de signaux de commande à destination de l'unité de calcul 12, le microprocesseur 10 se trouve dans un état d'attente pendant une durée déterminée correspondant à un nombre déterminé de cycles d'horloge. Généralement, on parle de « gel » du microprocesseur pour désigner un tel état d'attente.

De plus, l'unité de calcul 12, n'étant plus commandée pendant l'état d'attente, elle se trouve dans un état passif (ou de veille) dans lequel elle ne consomme très peu d'énergie car les unités logiques qu'elle contient n'exécutent pas d'opérations élémentaires.

En variante, le signal de blocage SB est délivré sur une entrée EN2 d'activation et de désactivation, dite « entrée ENABLE », de l'unité de décodage 26 qui, en conséquence, est désactivée et ne décode plus d'instructions.

Dans une autre variante, le signal de blocage SB est délivré sur une entrée EN3 d'activation et de désactivation, dite « entrée ENABLE », du registre d'instruction 20 qui, en conséquence, est désactivée et ne stocke plus les instructions à exécuter.

Dans une autre variante, le signal de blocage SB est délivré sur une entrée EN4 d'activation et de désactivation, dite « entrée ENABLE », du compteur ordinal 18 qui, en conséquence, est désactivée et ne stocke plus les adresses des instructions à exécuter.

Les résultats sont identiques quelque soit la variante de réalisation mise en oeuvre, l'interruption et le blocage du traitement des instructions étant simplement réalisés d'une manière différente et/ou complémentaire.

Une application de l'invention concerne des microprocesseurs présentant une architecture RISC et par conséquent une architecture pipeline où l'optimisation du code est un facteur essentiel aux bonnes performances. Dans une telle application, la génération d'un état d'attente de plusieurs cycles d'horloge via l'exécution d'une unique instruction d'attente est particulièrement avantageuse.

On a décrit précédemment qu'une instruction est traitée selon un cycle d'instructions qui comprend entre autre un cycle de recherche, un cycle de décodage, un cycle d'exécution et un cycle d'écriture, chacun de ces quatre cycles étant effectué en un cycle d'horloge respectif. Ainsi, une instruction est traitée, dans un microprocesseur classique, selon quatre cycles d'horloge.

L'architecture pipeline permet de traiter simultanément plusieurs instructions. Par exemple, elle commence l'exécution d'une instruction sans attendre la fin de la précédente. En particulier, une instruction est appliquée en entrée de l'unité de calcul, tandis qu'une seconde est décodée et qu'une troisième est récupérée d'une mémoire externe. Par conséquent, la durée de traitement d'une instruction peut être d'un cycle d'horloge uniquement.

Pour cette application, le temporisateur 34 délivre un signal de temporisation ST vers le séquenceur 16 qui délivre alors un signal de blocage SB à une unité de l'architecture pipeline comme une unité de récupération 22 ou une unité de décodage 26. Le traitement des instructions est ainsi interrompu et bloqué comme décrit précédemment. Le microprocesseur 10 est alors dans un état d'attente pendant une durée déterminée correspondant à un nombre déterminé de cycles d'horloge. On parle également de « gel » du microprocesseur ou « gèle » du pipeline.

De plus, l'invention s'applique également aux microprocesseurs 8 bits, 16 bits, 32 bits ou plus qui traitent respectivement des instructions de 8 bits, 16 bits, 32 bits ou plus, la taille en nombre de bits de l'instruction n'influençant pas la mise en oeuvre du procédé.

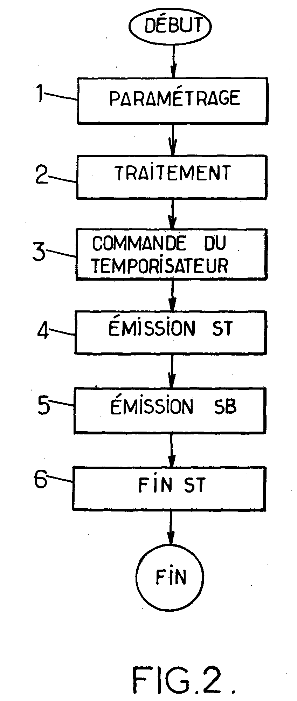

La figure 2 illustre, sous forme d'organigramme, les étapes d'un exemple de procédé de gestion d'un état d'attente d'un microprocesseur selon la présente invention.

Le procédé comprend une étape optionnelle de paramétrage 1 pour paramétrer la durée de l'état d'attente à générer, c'est-à-dire par exemple le nombre de cycles d'horloge de l'état d'attente. Cette étape est bien entendu réalisée lors de la phase de développement du code de l'application qui est destiné à être exécuté dans le microprocesseur 10. On règle la durée selon une valeur spécifiée en paramètre de l'instruction d'attente. Par exemple, pour une instruction d'attente référencée WAIT dans le code et pour une durée de 8 cycles d'horloge, on écrit « WAIT 8 » dans le listage du code.

Dans une étape de traitement 2, on traite l'instruction d'attente selon le cycle d'instruction déjà décrit précédemment.

Dans une étape 3, le séquenceur 16 commande le temporisateur 34 qui est ainsi activé et qui délivre dans une étape 4 un signal de temporisation ST qui est délivré au séquenceur 16.

Dans une étape 5, le séquenceur 16 interrompt et bloque temporairement le traitement des instructions en réponse au signal de temporisation ST. A cet effet, le séquenceur 16 délivre un signal de blocage SB à l'unité de récupération 22 et/ou à l'unité de décodage 26 et/ou le registre d'instruction 20 et/ou le compteur ordinal 18, ainsi qu'il a été dit plus haut. Le microprocesseur 10 se trouve ainsi dans un état d'attente pendant une durée déterminée.

Tant que le temporisateur 34 délivre le signal de temporisation ST au séquenceur 16, ledit séquenceur bloque le traitement des instructions.

Lorsque la durée de temporisation est écoulée, dans une étape 6, le séquenceur 16 ne délivre plus de signal de blocage SB et parallèlement désactive le temporisateur 34. Le traitement des instructions reprend son cours normal et le microprocesseur sort de l'état d'attente.

## Revendications

1. Microprocesseur (10) comprenant une unité de calcul (12) qui comporte des unités logiques pour exécuter des opérations associées à des instructions déterminées d'un jeu d'instructions du microprocesseur et une unité de commande (14) pour interpréter les instructions et pour commander les unités logiques en conséquence, **caractérisé en ce qu'**il comprend en outre un temporisateur (34) interne qui est activé par l'unité de commande en réponse à l'exécution d'une instruction dédiée du jeu d'instructions du microprocesseur, dite instruction d'attente, et qui délivre un signal de temporisation (ST) délivré à l'unité de commande pour placer le microprocesseur dans un état d'attente pendant une durée de temporisation déterminée.

2. Microprocesseur selon la revendication 1, dans lequel l'unité de commande génère un signal de blocage (SB) pour interrompre et bloquer le traitement des instructions pendant la durée de temporisation.

3. Microprocesseur selon la revendication 1, dans lequel le temporisateur interne est programmable, la durée de temporisation étant fonction d'une valeur spécifiée en paramètre de l'instruction d'attente.

4. Microprocesseur selon la revendication 3, dans lequel la durée de temporisation correspond à un nombre déterminé de cycles d'horloge du microprocesseur.

5. Microprocesseur selon la revendication 2, dans lequel l'unité de commande comporte une unité de récupération (22) pour récupérer des instructions à exécuter qui sont stockées dans une mémoire de programme (24) et un séquenceur (16) qui reçoit le signal de temporisation et qui délivre le signal de blocage délivré sur une entrée (EN1) d'activation et de désactivation de ladite unité de récupération pour interrompre et bloquer la récupération des instructions.

6. Microprocesseur selon la revendication 2 ou 5, dans lequel l'unité de commande comporte une unité de décodage (26) pour décoder des instructions à exécuter et un séquenceur (16) qui reçoit le signal de temporisation et qui délivre le signal de blocage délivré sur une entrée (EN2) d'activation et de désactivation de ladite unité de décodage pour interrompre et bloquer le décodage des instructions.

7. Microprocesseur selon la revendication 2 ou 6, dans lequel l'unité de commande comporte un registre d'instruction (20) pour stocker une instruction à exécuter et un séquenceur (16) qui reçoit le signal de temporisation et qui délivre le signal de blocage sur une entrée (EN3) d'activation et de désactivation dudit registre d'instruction pour interrompre et bloquer le stockage d'instructions à exécuter.

8. Microprocesseur selon la revendication 2 ou 7, dans lequel l'unité de commande comprend un compteur ordinal (18) qui stocke l'adresse d'une future instruction à exécuter et un séquenceur (16) qui reçoit le signal de temporisation et qui délivre le signal de blocage sur une entrée (EN4) d'activation et de désactivation dudit compteur pour interrompre et bloquer le stockage d'adresse dans le compteur.

9. Microprocesseur selon l'une quelconque des revendications précédentes, présentant une architecture pipeline.

10. Microprocesseur selon l'une quelconque des revendications précédentes, présentant une architecture RISC.

11. Procédé de gestion d'un état d'attente d'un microprocesseur (10) comprenant une unité de calcul (12) qui comporte des unités logiques pour exécuter des opérations associées à des instructions appartenant à un jeu d'instructions du microprocesseur et une unité de commande (14) pour interpréter les instructions et pour commander les unités logiques en conséquence, **caractérisé en ce qu'**il comprend les étapes suivant lesquelles :
- l'unité de commande active un temporisateur (34) interne au microprocesseur en réponse à l'exécution d'une instruction dédiée du microprocesseur, dite instruction d'attente ;
- le temporisateur délivre un signal de temporisation (ST) qui est délivré à l'unité de commande ; et,
- l'unité de commande délivre un signal de blocage (SB) pour interrompre et bloquer le traitement des instructions afin de placer le microprocesseur dans l'état d'attente pendant une durée de temporisation déterminée.

12. Procédé selon la revendication 11, comprenant en outre une étape optionnelle de paramétrage suivant laquelle on règle la durée de temporisation, ladite durée étant une valeur spécifiée en paramètre de l'instruction d'attente.

13. Procédé selon la revendication 12, suivant lequel la durée de temporisation correspond à un nombre déterminé de cycles d'horloge.

14. Procédé l'une quelconque des revendications 11 à 13, suivant lequel l'unité de commande comprend des unités de traitement des instructions incluant au moins une unité de récupération (22) pour récupérer dans une mémoire de programme (24) des instructions à exécuter et un séquenceur (16) qui reçoit le signal de temporisation et qui délivre le signal de blocage, en réponse au signal de temporisation, sur une entrée (EN1) d'activation et de désactivation de ladite unité de récupération afin d'interrompre et bloquer la récupération des instructions pendant la durée de temporisation.

15. Procédé selon l'une quelconque des revendications 11 à 14, suivant lequel l'unité de commande comprend des unités de traitement des instructions incluant au moins une unité de décodage (26) pour décoder des instructions à exécuter et un séquenceur (16) qui reçoit le signal de temporisation et qui délivre le signal de blocage, en réponse au signal de temporisation, sur une entrée (EN2) d'activation et de désactivation de ladite unité de récupération afin d'interrompre et bloquer la récupération des instructions pendant la durée de temporisation déterminée.

16. Procédé selon l'une quelconque des revendications 11 à 15, suivant lequel l'unité de commande comprend des unités de traitement des instructions incluant au moins un registre d'instruction (20) qui stocke des instructions à exécuter et un séquenceur (16) qui reçoit le signal de temporisation et qui délivre le signal de blocage, en réponse au signal de temporisation, sur une entrée (EN3) d'activation et de désactivation dudit registre d'instruction afin d'interrompre et bloquer le stockage des instructions dans ledit registre pendant la durée de temporisation déterminée.

17. Procédé selon l'une quelconque des revendications 11 à 16, suivant lequel l'unité de commande comprend des unités de traitement des instructions incluant au moins un compteur ordinal (18) qui stocke l'adresse de l'instruction suivante à exécuter et un séquenceur (16) qui reçoit le signal de temporisation et qui délivre le signal de blocage, en réponse au signal de temporisation, sur une entrée (EN4) d'activation et de désactivation dudit compteur afin d'interrompre et bloquer le stockage d'adresse pendant la durée de temporisation déterminée.
